# EUROPÄISCHE PATENTANMELDUNG

(11) **EP 1 279 455 A1**
(43) Veröffentlichungstag der Anmeldung: **29.01.2003**
(21) Anmeldenummer: 02013847.5
(22) Anmeldetag: 22.06.2002
(51) Int. Cl.: B23F 23/12, B23F 21/16

(54) **Walzfräser**

(30) Priorität: 19.07.2001 DE 10135282
(71) Anmelder: Wilhelm Fette GmbH, 21493 Schwarzenbek (DE)
(72) Erfinder: Soltau, Wolfgang, 29490 Neu Darchau (DE); Oppelt, Klaus, 21481 Lauenburg (DE); Carmincke, Wolfgang, 21379 Scharnebeck (DE)
(74) Vertreter: Graalfs, Edo

(57) **Zusammenfassung**

Wälzfräser (10) mit einem Werkzeugkörper (12), der zumindest teilweise aus einem Schneidstoff geformt ist und der eine durchgehende axiale Bohrung (20) aufweist, Bohrungsabschnitten (22,24) an den Enden der axialen Bohrung (20), einem Schaftkörper (14,16) an jedem Ende des Werkzeugkörpers (12) der einen Abschnitt (34) aufweist, der annähernd passend in den Bohrungsabschnitt (22,24) einsetzbar ist, einem radialen Flansch (36), der an die Stirnseite des Werkzeugkörpers (12) anlegbar ist, wenn der Abschnitt (34) im Bohrungsabschnitt (22,24) sitzt sowie, einem Schaftabschnitt (38) auf der dem Abschnitt (34) gegenüberliegenden Seite des Flansches (36) für die Einspannung in einer Werkzeugmaschine, wobei die Schaftkörper (14,16) eine axiale Bohrung (44) aufweisen, die einen Innengewindeabschnitt (46) enthalten, die gegenläufig sind und einem Spannstab (18), der durch die axiale Bohrung (20) des Werkzeugkörpers (12) und der Schaftkörper (14,16) hindurch- bzw. einführbar ist, an den Enden jeweils einen Außengewindeabschnitt (52,54) aufweist, der mit dem zugeordneten Innengewindeabschnitt (46) so zusammenwirk, daß bie einer Drehung des Spannstabes (18) in einer vorgegebenen Drehrichtung die Schaftkörper (14,16) in den Werkzeugkörper (12) hinein und gegeneinander angezogen werden.

## Beschreibung

Die Erfindung bezieht sich auf einen Wälzfräser nach dem Patentanspruch 1.

Wie bekannt, werden Wälzfräser in erster Linie für die Herstellung von Verzahnungsteilen, wie Zahnräder, Schneckenräder, Zahnstangen oder dergleichen verwendet. Bei den Wälzfräsern unterscheidet man im Hinblick auf ihre Aufnahme in einer Wälzfräsmaschine zwischen einer Bohrungs- und einer Schaftausführung. Bei der Bohrungsausführung ist die durchgehende axiale Bohrung des Werkzeugkörpers mit einer Längsnut zur formschlüssigen Drehmomentübertragung versehen. Alternativ kann eine ein- oder zweiseitige Quernut an den Stirnseiten des Werkzeugkörpers zur formschlüssigen Drehmomentübertragung vorgesehen werden. Es ist jedoch auch bekannt, bei der Bohrungsausführung eine kraftschlüssige Drehmomentübertragung an der Stirnseite vorzunehmen. Wälzfräser in Bohrungsausführung werden vor allen Dingen für Serienfertigung und geringere Anforderungen an die Werkstückgenauigkeit verwendet. Üblicherweise sind die Wälzfräser aus Schnellstahl geformt. Es ist jedoch auch bekannt, den Wälzfräser aus Hartmetall zu fertigen.

Bei der Schaftausführung sind an den Enden des Werkzeugkörpers Schäfte zur kraftschlüssigen Drehmomentübertragung geformt. Die Schäfte können beidseitig kegelig sein, einseitig kegelig oder ein- oder beidseitig zylindrisch. Die Schäfte können hohl sein, und die kegeligen Schäfte können auch als Steilkegel ausgeführt werden. Wälzfräser in Schaftausführung werden vor allen Dingen für hohe Qualitätsanforderungen eingesetzt, was eine hohe Rundlaufgenauigkeit voraussetzt. Nachteilig ist jedoch der relativ hohe Aufwand für die Herstellung, insbesondere wenn der Werkzeugkörper aus Hartmetall gefertigt wird. Aus Hartmetall gefertigte Fräser sind äußerst empfindlich gegen Stoß und Schlag. Wird der Fräser beschädigt, muß er häufig ausgetauscht werden.

Aus DE 198 60 403 ist eine Anordnung aus Wälzfräser und Aufnahmedorn bekannt geworden, bei welcher der Werkzeugkörper mit einer axialen Bohrung versehen ist, die an den Enden geschliffene zylindrische Zentrierflächen aufweist. Der sich durch die Bohrung hindurcherstreckende Dorn weist komplementäre Sitzflächen auf. Zwischen den Zentrier- und Sitzflächen ist jeweils ein hülsenförmiger Käfig angeordnet, der eine Dicke aufweist, die geringer ist als der radiale Abstand zwischen Zentrierund Sitzflächen und einen Außendurchmesser, der geringer ist als der Innendurchmesser der Zentrierflächen. In Umfangsrichtung ist mindestens eine Reihe von vorzugsweise metallischen Vorspannelementen im Käfig gelagert, die mit der zugeordneten Zentrierfläche und der Sitzfläche in Kontakt sind. Der Durchmesser bzw. der Abstand der Anlagepunkte oder Anlagelinien der Vorspannelemente ist geringfügig größer als der radiale Abstand zwischen Zentrier- und Sitzflächen. Der Dorn weist an einem Ende einen Gewindeabschnitt auf, auf den eine hydraulisch wirkende Verspannmutter aufschraubbar ist, die über einen Ring auf eine Stirnseite des Fräskörpers einwirkt, während am gegenüberliegenden Ende ein Bund des Aufnahmedorns an der anderen Stirnseite des Werkzeugkörpers anliegt. Auf diese Weise wird der Werkzeugkörper auf dem Dorn axial festgelegt. Anstelle der hülsenförmigen Käfige kann auch eine hydraulisch radial ausdehnbare Spannhülse vorgesehen werden, die zwischen Zentrier- und Sitzfläche wirkt. Mit der beschriebenen Anordnung soll eine hohe Rundlaufgenauigkeit ermöglicht werden, ohne die Nachteile einer Schaftausführung in Kauf zu nehmen. Gleichwohl ist die beschriebene Anordnung relativ aufwendig.

Der Erfindung liegt die Aufgabe zugrunde, einen Wälzfräser zu schaffen, der die Rundlaufgenauigkeit eines Wälzfräsers in Schaftausführung aufweist und an verschiedene Aufnahmebedingungen angepasst werden kann.

Diese Aufgabe wird durch die Merkmale des Patentanspruchs 1 gelöst.

Bei dem erfindungsgemäßen Wälzkörper weist der mit einer axialen Bohrung versehene Werkzeugkörper an den Enden Bohrungsabschnitte auf. Es sind separate Schaftkörper für beide Enden des Werkzeugkörpers vorgesehen. Jeder Schaftkörper weist einen Abschnitt auf zur passenden Aufnahme im Bohrungsabschnitt. Er weist ferner einen radialen Flansch auf, der sich gegen die Außenseite des Werkzeugkörpers anlegt, wenn der Abschnitt im Bohrungsabschnitt einsitzt. Mit Hilfe der Flächen der Bohrung und der Schaftkörper wird eine präzise Zentrierung des Werkzeugkörpers erhalten und damit die gewünschte hohe Rundlaufgenauigkeit. Die Abschnitte der Schaftkörper können konisch, zylindrisch oder im Querschnitt polygonal sein, und die Bohrungsabschnitte im Werkzeugkörper sind entsprechend geformt. Auf der anderen Seite des Flansches ist ein Schaftabschnitt vorgesehen für die Einspannung in der Werkzeugmaschine, wobei dieser zylindrisch oder auch kegelig sein kann.

Die Schaftkörper weisen axiale Durchbohrungen auf, und die Bohrungen haben Innengewindeabschnitte, wobei ein Schaftkörperpaar jeweils gegenläufige Innengewindeabschnitte aufweist. Schließlich ist ein Spannelement, z.B. eine Spannstange oder ein Spannstab vorgesehen mit Außengewindeabschnitten in den Endbereichen. Diese werden mit den Innengewindeabschnitten in Eingriff gebracht. Dadurch können die Schaftkörper in und gegen den Werkzeugkörper gespannt werden. Zu diesem Zwecke sind die zusammenwirkenden Gewindepaare gegenläufig, um die beschriebene Spannwirkung zu erzeugen.

Nach einer Ausgestaltung der Erfindung ist der Spannstab völlig innerhalb des Werkzeugkörpers und der Schaftkörper aufgenommen und an einem Ende mit einem Innensechskant versehen für den Eingriff mit einem Schraubwerkzeug. Der Flansch kann mindestens eine radiale Nut aufweisen, die mit einer radialen Nut am axialen Bund des Werkzeugkörpers ausgerichtet ist für die formschlüssige Drehmomentübertragung von der Aufnahme in der Fräsmaschine auf den Wälzfräser.

Die erfindungsgemäße Ausführung eines Wälzfräsers gleicht einem Wälzfräser in Schaftausführung, ohne daß der Schaft einteilig mit dem Werkzeugkörper geformt ist. Vielmehr können die Spannschäfte ausgewechselt werden, z.B. durch andere mit einer anderen Aufnahmemöglichkeit, beispielsweise einer Kegelaufnahme. Mit anderen Worten, die Werkzeugkörper können unabhängig von der Werkzeugaufnahme standardisiert hergestellt werden, während entsprechende Spannschäfte für die jeweilige Maschinenaufnahme mit den Werkzeugkörpern verbunden werden. Der erfindungsgemäße Wälzfräser erlaubt auch eine Austauschbarkeit der Antriebsseite. Sind die Schäfte bei Beschädigung oder Verschleiß nicht mehr brauchbar, können sie ohne weiteres durch intakte Schäfte ausgewechselt werden. Auch der Einsatz von Sonderschäften zur Fertigung des Wälzfräsers, welche and die Fertigungsmaschine angepaßt sind, ist ohne weiteres möglich.

Bei dem erfindungsgemäßen Wälzfräser wird auch eine Gewichts- und Materialreduzierung durch die Durchbohrung des Werkzeugkörpers erhalten. Dies gilt insbesondere für Werkzeugkörper aus Hartmetall. Die Schaftkörper sind vorzugsweise aus Stahl gefertigt.

Neben den erwähnten Fertigungs- und Einsatzvorteilen wird auch der Vorteil einer hohen Rundlaufgenauigkeit erhalten, wie sie bei herkömmlichen Schaftausführungen erreicht wird.

Die Erfindung wird nachfolgend anhand eines in Zeichnungen dargestellten Ausführungsbeispiels näher erläutert.
- Fig. 1: zeigt teilweise im Schnitt einen Wälzfräser nach der Erfindung.
- Fig. 2: zeigt die Ansicht des Wälzfräsers nach Fig. 1 in Richtung Pfeil 2.
- Fig. 3: zeigt den Spannstab des Wälzfräsers nach Fig. 1 in Seitenansicht.

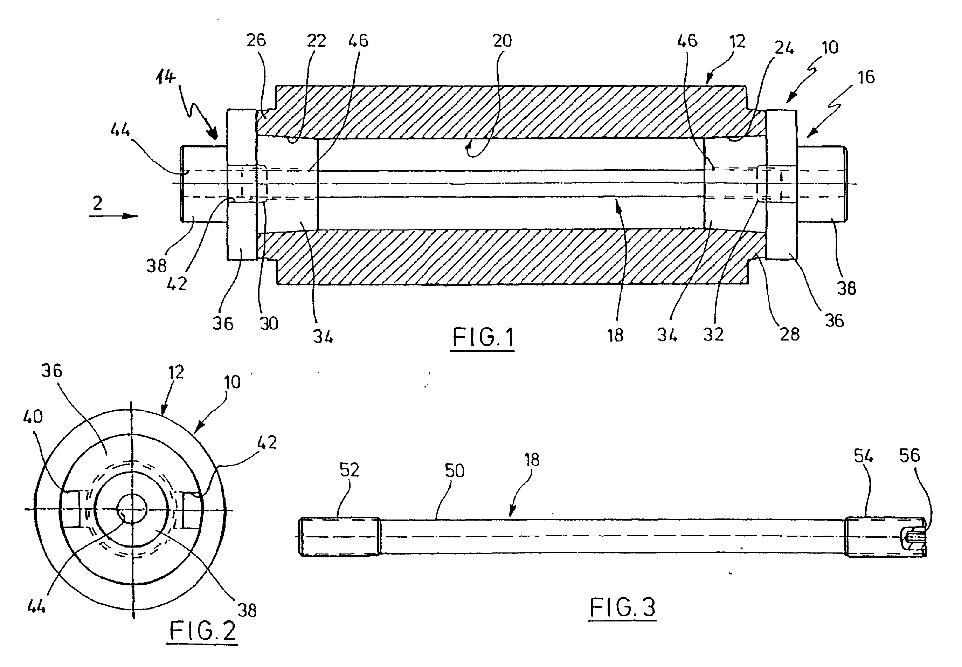

In den Figuren 1 und 2 ist ein Wälzfräser 10 dargestellt, der sich aus einem Werkzeugkörper 12, Schaftkörpern 14, 16 und einem Spannstab 18 zusammensetzt.

Der Werkzeugkörper 12, der z.B. einteilig aus Hartmetall gefertigt ist, weist eine Formgebung auf, wie sie für Wälzfräser üblich ist. Hierauf soll im einzelnen nicht eingegangen werden. Der Werkzeugkörper 12 weist eine axiale Durchbohrung 20 auf, welche an den Enden konische Bohrungsabschnitte 22 bzw. 24 aufweist. Die Erweiterung der konischen Bohrungsabschnitte 22, 24 erfolgt zu den Enden der Bohrung 20. Der Werkzeugkörper 12 hat an den Enden jeweils einen axialen Bund 26 bzw. 28, in welchen radiale Nuten diametral eingeformt sind, welche bei 30 und 32 in Fig. 1 gestrichelt angedeutet sind.

Jeder Schaftkörper 14, 16 weist einen konischen Abschnitt 34, einen radialen Flansch 36 und einen Einspannabschnitt 38 auf. Letztere sind zylindrisch. Sie können jedoch auch kegelig sein. Die konischen Abschnitte 34 sitzen passend in den Bohrungsabschnitten 22, 24 des Werkzeugkörpers 12. Die Flächen der Bohrungsabschnitte 22, 24 sind präzise geschliffen. Dies trifft auch zu auf die Konusflächen der konischen Abschnitte 34. Wenn die konischen Abschnitte 34 in den Bohrungsabschnitten einsitzen, liegt der Flansch 36 satt am zugehörigen axialen Bund 26, 28 an.

Wie aus Fig. 2 zu erkennen, weist der Flansch 36 diametral gegenüberliegend radiale Nuten 40, 42 auf, welche mit den Nuten 30, 32 des Werkzeugkörpers 12 ausgerichtet sind. Die Nuten dienen für den Formschluß mit der Aufnahme der Wälzfräsmaschine zur Drehmomentübertragung von der Spindel der Maschine auf den Wälzfräser 10.

Die Schaftkörper 14, 16 weisen eine Durchbohrung 44 auf, welche im Bereich des konischen Abschnitts 34 mit einem Innengewinde 46 versehen ist.

Der in Fig. 3 dargestellte Spannstab weist einen relativ langen glatten Stangenabschnitt 50 auf, der an den Enden mit Außengewindeabschnitten 52 bzw. 54 versehen ist von etwas größerem Durchmesser als der Stangenabschnitt 50. Am freien Ende des Gewindeabschnitts 54 ist ein Innensechskant 56 für den Eingriff mit einem Drehwerkzeug vorgesehen. Die Gewinde der Außengewindeabschnitte 52, 54 sind gegenläufig, ebenso wie die Gewinde 46 der konischen Abschnitte 34. Wird nach der Montage gemäß Fig. 1 der Spannstab 18 verdreht, beispielsweise im Uhrzeigersinn, verspannt er die Schaftkörper 14, 16 gegeneinander, so daß die konischen Abschnitte 34 mit den konischen Bohrungsabschnitten 22, 24 in satte Anlage gelangen zwecks Zentrierung des Werkzeugkörpers 12 bezüglich der Schaftkörper 14, 16. Mit Hilfe der Flansche 36 wird der Werkzeugkörper 12 axial festgelegt. Die Drehmomentübertragung erfolgt, wie schon erwähnt, über die Nuten 30, 32 des Werkzeugkörpers 12. Die Flansche verhindern auch, daß die konischen Abschnitte zu weit in die Bohrung 20 gezogen werden, wodurch der Werkzeugkörper platzen kann.

## Patentansprüche

1. Wälzfräser mit
- einem Werkzeugkörper (12), der zumindest teilweise aus einem Schneidstoff geformt ist und der eine durchgehende axiale Bohrung (20) aufweist
- Bohrungsabschnitten (22, 24) an den Enden der axialen Bohrung (20)
- einem Schaftkörper (14, 16) an jedem Ende des Werkzeugkörpers (12), der einen Abschnitt (34) aufweist, der annähernd passend in den Bohrungsabschnitt (22, 24) einsetzbar ist
- einem radialen Flansch (36), der an die Stirnseite des Werkzeugkörpers (12) anlegbar ist, wenn der Abschnitt (34) im Bohrungsabschnitt (22, 24) sitzt sowie
- einem Schaftabschnitt (38) auf der dem Abschnitt (34) gegenüberliegenden Seite des Flansches (36) für die Einspannung in einer Werkzeugmaschine, wobei die Schaftkörper (14, 16) eine axiale Bohrung (44) aufweisen, die einen Innengewindeabschnitt (46) enthalten, die gegenläufig sind und
- einem Spannelement, vorzugsweise ein Spannstab (18), das durch die axiale Bohrung (20) des Werkzeugkörpers (12) und der Schaftkörper (14, 16) hindurch- bzw. einführbar ist, an den Enden jeweils einen Außengewindeabschnitt (52, 54) aufweist, der mit dem zugeordneten Innengewindeabschnitt (46) so zusammenwirkt, daß bei einer Relativdrehung der Gewinde in einer vorgegebenen Drehrichtung die Schaftkörper (14, 16) in den Werkzeugkörper (12) hinein und gegeneinander angezogen werden.

2. Wälzfräser nach Anspruch 1, **dadurch gekennzeichnet, daß** der Spannstab (18) an einem Ende einen Innensechskant (56) aufweist.

3. Wälzfräser nach Anspruch 1 oder 2, **dadurch gekennzeichnet, daß** die Innengewindeabschnitte (46) im Abstand zu dem äußeren Ende der axialen Bohrung (44) angeordnet sind und die Außengewindeabschnitte (52, 54) an den Enden des Spannstabs (18) angeordnet sind, wodurch der Spannstab (18) vollständig innerhalb von Werkzeugkörper (12) und Schaftkörper (14, 16) zu liegen kommt.

4. Wälzfräser nach einem der Ansprüche 1 bis 3, **dadurch gekennzeichnet, daß** der Flansch (36) mindestens eine radiale Nut (40, 42) aufweist, die mit einer radialen Nut (30, 32) an einem axialen Bund (26, 28) des Werkzeugkörpers (12) ausgerichtet ist.

5. Wälzfräser nach einem der Ansprüche 1 bis 4, **dadurch gekennzeichnet, daß** der Werkzeugkörper (12) einteilig aus Hartmetall geformt ist.
